# EUROPÄISCHE PATENTSCHRIFT

(11) **EP 3 443 640 B1**
(45) Veröffentlichungstag und Bekanntmachung des Hinweises auf die Patenterteilung: **19.10.2022**
(21) Anmeldenummer: 17716168.4
(22) Anmeldetag: 05.04.2017
(51) Int. Cl.: H02K 1/30, F03B 13/00, F03D 9/25, F03B 13/08, H02K 1/02, H02K 7/18, F03B 3/04, F03D 15/20

(54) **GENERATORROTOR FÜR EINEN GENERATOR EINER WINDENERGIEANLAGE ODER EINES WASSERKRAFTWERKS, SOWIE GENERATOR, WINDENERGIEANLAGE UND WASSERKRAFTWERK MIT SELBIGEM**
GENERATOR ROTOR FOR A GENERATOR OF A WIND TURBINE OR A HYDROELECTRIC POWER PLANT, GENERATOR, AND WIND TURBINE AND HYDROELECTRIC POWER PLANT COMPRISING SAME
ROTOR DE GÉNÉRATEUR POUR UN GÉNÉRATEUR D'ÉOLIENNE OU DE CENTRALE HYDROÉLECTRIQUE, GÉNÉRATEUR, ÉOLIENNE ET CENTRALE HYDROÉLECTRIQUE ÉQUIPÉS DUDIT ROTOR DE GÉNÉRATEUR

(30) Priorität: 13.04.2016 DE 102016206179
(43) Veröffentlichungstag der Anmeldung: 20.02.2019
(73) Patentinhaber: Wobben Properties GmbH, 26607 Aurich (DE)
(72) Erfinder: BOETTCHER, Bernd, 26607 Aurich (DE)
(74) Vertreter: Eisenführ Speiser
(86) Internationale Anmeldenummer: PCT/EP2017/058047
(87) Internationale Veröffentlichungsnummer: WO 2017/178291

(56) Entgegenhaltungen:
- EP-A1- 2 028 744
- EP-A1- 2 143 941
- EP-A2- 1 094 145
- EP-A2- 1 772 624
- EP-A2- 2 006 538
- EP-A2- 2 442 432
- DE-A1-102004 014 640
- DE-A1-102004 035 382
- DE-A1-102013 101 957
- US-A1- 2007 132 335
- US-A1- 2008 143 198
- US-A1- 2008 313 884
- US-A1- 2014 314 580

## Beschreibung

Die Erfindung betrifft einen Generatorrotor für einen Generator, insbesondere langsam drehenden Generator, einer Windenergieanlage oder eines Wasserkraftwerkes. Die Erfindung betrifft ferner einen Generator mit einem solchen Generatorrotor und eine Windenergieanlage mit einem solchen Generator.

Windenergieanlagen sind allgemein gekannt. Sie weisen einen Turm auf, auf dem eine Gondel drehbar gelagert ist. An der Gondel ist, häufig im Inneren, ein Maschinenträger montiert, ein Generator, eine Antriebswelle für den Generator, optional ein Getriebe, und eine Rotornabe mit einer Anzahl von Rotorblättern, die zum Antrieb des Generators im Wind rotieren. Der Generator weist üblicherweise einen von dem Maschinenträger getragenen Generatorstator und einen relativ zu dem Generatorstator, vorzugsweise innen oder außen, umlaufenden Generatorrotor auf.

In Wasserkraftwerken werden Turbinen dazu eingesetzt, mittels rotatorischen Antriebs ihrer Turbinenschaufeln unter Ausnutzung der kinetischen Energie einer Wasserströmung elektrische Energie zu erzeugen. Hierbei wird grundsätzlich unterschieden zwischen Turbinen, die über eine Rotorwelle ein Drehmoment in einen Bereich außerhalb eines Strömungskanals übertragen, wo sodann das an der Rotorwelle vorliegende Drehmoment zum Antrieb eines Generators genutzt wird, und solchen Turbinen, bei denen die Turbinenrotoren unmittelbar mit einem Läufer eines Generators verbunden sind. Erstgenannte Typen sind unter anderem aus DE 10 2008 045 500 A1 bekannt. In letzterem Fall spricht man von sogenannten Straight-Flow Turbinen. Sofern die Rotationsachse der Turbinen i m Wesentlichen parallel zur Strömungsrichtung des Wassers liegt, spricht man von Axial-Turbinen. Die Generatoren, die bei den vorgenannten Wasserkraftwerken zum Einsatz kommen, können im Wesentlichen funktionsidentisch zu den Generatoren von Windenergieanlagen ausgeführt werden, weswegen die Erfindung sich auch auf dieses Gebiet erstreckt.

Der Generatorrotor weist eine Vielzahl von Polschuhen an einem sogenannten Rotorgurt auf. Die Polschuhe laufen relativ zu den Statorwicklungen des Generatorstators um. Zwischen den Polschuhen und den Wicklungen des Generatorstators ist ein Luftspalt ausgebildet, der möglichst schmal ist. Über ein Erregerfeld im Generatorrotor wird im Generatorstator eine Spannung induziert. Aufgrund des sich drehenden, immer leicht unstetig verhaltenden Erregerfeldes entstehen Drehmomentschwankungen. Diese Drehmomentschwankungen weisen üblicherweise eine von der Drehzahl des Generatorrotors abhängige Frequenz auf und verursachen Schwingungen im Generator.

Die im Generator so erzeugten Schwingungen werden über die Tragstruktur und den Nabenflansch auf die Hauptwelle der Windenergieanlage oder Anlagenteile des Wasserkraftwerks übertragen, und im erstgenannten Fall über diese durch die Rotornabe bis in die Rotorblätter.

Da Windenergieanlagen zunehmend auch in der Nähe besiedelter Gebiete errichtet werden, liegt ein besonderes Augenmerk auf der möglichst weitgehenden Vermeidung störender Schallemissionen. Des Weiteren ist für bekannte Windenergieanlagen zu konstatieren, dass die Konstruktion der im Generatorrotor vorgesehenen Tragstruktur vergleichsweise aufwendig ist. Es wird üblicherweise eine vielteilige Stahlkonstruktion vorgesehen, welche in entsprechend vielen Arbeitsschritten mittels Schweißen und anderen Verbindungstechniken gefertigt werden muss. Der Material- und Kosteneinsatz ist entsprechend hoch.

Das Deutsche Patent- und Markenamt hat in der Prioritätsanmeldung zu vorliegender Anmeldung folgenden Stand der Technik recherchiert: DE 10 2008 045 500 A1, DE 10 2010 030 205 A1 und DE 10 2011 006 680 A1.

DE 10 2004 035382 A1, EP 2 143 941 A1 oder DE 10 2013 101957 A1 offenbaren Rotoren für Generatoren, die einteilig und aus einem einzigen Material ausgebildet sind.

Aus EP 2 028 744 A1 ist ein Rotor für eine elektrische Maschine bekannt, die aus einer Innenhülse und einem damit verbundenen Zwischenring besteht, der die Magneten und Pole trägt. Der Zwischenring ist aus Aluminium oder Kunststoff und die Innenhülse aus Stahl ausgebildet.

Ferner offenbart EP 1 772 624 A2 einen Generator für eine Windenergieanlage mit einem Rotor und einem Stator. Der Rotor ist zweiteilig ausgebildet, um einen Teil des Rotors, während des Austauschs der den Rotor tragenden Lager, zeitweise fest mit dem Stator koppeln zu können. Der abnehmbare Teil des Rotors kann aus Kohlefaser oder einem geeigneten Verbundmaterial ausgebildet sein.

Der Erfindung lag somit die Aufgabe zugrunde, einen Generatorrotor der eingangs bezeichneten Art dahingehend zu verbessern, dass er die im Stand der Technik vorgefundenen Nachteile möglichst weitgehend überwindet. Insbesondere lag der Erfindung die Aufgabe zugrunde, einen Generatorrotor der eingangs bezeichneten Art dahingehend zu verbessern, dass die Windenergieanlage bzw. das Wasserkraftwerk hinsichtlich des Schwingungsverhaltens verbessert wird, und insbesondere insgesamt geringere Geräuschemissionen abgibt. Ferner lag der Erfindung insbesondere die Aufgabe zugrunde, den Generatorrotor der eingangs bezeichneten Art dahingehend zu verbessern, dass dessen Fertigung kosten- und/oder zeitgünstiger erfolgen kann.

Die Erfindung löst die ihr zugrunde liegende Aufgabe, indem sie einen Generatorrotor mit den Merkmalen von Anspruch 1 vorschlägt. Der Generatorrotor weist einen Rotorgurt zum Halten mehrerer Polschuhe, einen Nabenflansch zur Befestigung des Generatorrotors an einer Welle, insbesondere Haupt- oder Getriebewelle, der Windenergieanlage, und eine Tragstruktur auf, welche mit dem Rotorgurt einerseits und mit dem Nabenflansch andererseits jeweils drehfest verbunden ist, wobei der Rotorgurt aus einem metallischen Werkstoff mit einem ersten Dämpfungsgrad besteht, und zumindest eines von: Tragstruktur oder Nabenflansch teilweise oder vollständig aus einem Material mit einem zweiten Dämpfungsgrad besteht, wobei der zweite Dämpfungsgrad höher ist als der erste Dämpfungsgrad. Unter dem Begriff des Dämpfungsgrads wird im Sinne der Erfindung das Lehrsche Dämpfungsmaß verstanden. Das Lehrsche Dämpfungsmaß lässt sich auf allgemein bekannte Art und Weise bestimmen bzw. ist in Form von Literaturangaben für eine Vielzahl von Werkstoffen bekannt. Sofern im Rahmen der Erfindung hinsichtlich des Materials von "vollständig" gesprochen wird, so ist hierunter zu verstehen, dass die wesentlichen, für die Kraftübertragung verantwortlichen Strukturelemente aus dem jeweiligen Material bestehen, dass aber etwaige Montage- und andere Einsatz- bzw. Befestigungsmittel nicht notwendigerweise aus jenem Material bestehen müssen.

Die Erfindung folgt dem Ansatz, die Schallübertragung von den Polschuhen am Rotorgurt in Richtung der Welle der Windenergieanlage gezielt durch verstärkte Energiedissipation zu vermindern. Diesbezüglich macht sich die Erfindung mehrere Erkenntnisse zunutze: Durch die Verwendung eines anderen Materials für die Tragstruktur und/oder den Nabenflansch, jeweils relativ zu dem metallischen Werkstoff des Rotorgurts, wird eine mehrteilige Bauform erzwungen; eine monolithische Bauweise, in der beispielsweise die Tragstruktur einteilig oder stoffschlüssig mit dem Rotorgurt und dem Nabenflansch verbunden ist, ist hierdurch nicht länger möglich. Beim Übergang vom metallischen Werkstoff in das Material der Tragstruktur und/oder des Nabenflansches wird zwangsläufig bereits Energie dissipiert, was die von dem Rotorgurt ausgehenden Schwingungen dämpft.

Dadurch, dass das Material der Tragstruktur und/oder des Nabenflansches einen höheren Dämpfungsgrad aufweist als das metallische Material des Rotorgurts, wird ferner in der Tragstruktur bzw. dem Nabenflansch weitere Energie dissipiert.

Unter einem langsam drehenden Generator wird erfindungsgemäß ein Generator mit einer Drehzahl von 50 Umdrehungen pro Minute oder weniger verstanden. Der erfindungsgemäße Generator ist vorzugsweise ein vielpoliger Synchron-Ringgenerator. Unter vielpolig wird eine Polzahl von 48 oder mehr, vorzugsweise 96 oder mehr verstanden.

In einer bevorzugten Weiterbildung der Erfindung liegt der erste Dämpfungsgrad in einem Bereich von 0,002 oder geringer, vorzugsweise in einem Bereich von 0,0015 oder geringer. Die meisten Stahlsorten weisen beispielsweise einen Dämpfungsgrad in jenen Bereichen auf.

In einer bevorzugten Ausführungsform beträgt der zweite Dämpfungsgrad das n-fache des ersten Dämpfungsgrades, wobei n vorzugsweise = 2 oder höher ist. Je höher der zweite Dämpfungsgrad relativ zu dem ersten Dämpfungsgrad ist, desto stärker fällt die Energiedissipation innerhalb der Tragstruktur aus, bzw. innerhalb des Nabenflansches. Zu beachten ist bei der Auslegung allerdings, dass die Tragstruktur bzw. der Nabenflansch immer noch eine ausreichende Steifigkeit, Schub- und Druckfestigkeit zur Kraftübertragung zwischen Rotorgurt und Nabenflansch bzw. Getriebewelle aufweisen müssen. Dies lässt sich allerdings neben der Materialbeschaffenheit auch durch zusätzliche Verstärkungsmaßnahmen in Form von Rippen, Stegen, etc. positiv beeinflussen, falls notwendig.

In einer weiteren bevorzugten Ausführungsform besteht zumindest eines von Tragstruktur oder Nabenflansch teilweise oder vollständig aus einem der folgenden Materialien:
- Beton;
- Betonverbundwerkstoff, insbesondere Stahlbeton oder Faserbeton;
- Massivholz;
- Sperrholz;
- Brettschichtholz;
- glasfaserverstärkter Kunststoff; oder
- kohlefaserverstärkter Kunststoff.

Sofern der Betonverbundstoff Faseranteile aufweist, werden diese Fasern vorzugsweise ausgewählt aus der Liste besteht aus: Stahlfasern, Kohlenstoff-, Glas-, Bambus-, Hanf-, oder Aramid-Fasern. In Ausführungsformen, in denen für das Material der Tragstruktur oder des Nabenflansches Sperrholz ausgewählt wird, hat sich insbesondere Furnier-Sperrholz als vorteilhaft herausgestellt.

Ein hervorhebenswerter Vorteil der Verwendung von Beton oder einem Betonverbundwerkstoff wie beispielsweise Stahlbeton ist dessen kostengünstige und zeiteffiziente Herstellung. Es hat sich herausgestellt, dass speziell bei der Verwendung von Stahlbeton eine im Vergleich zu bekannten Tragstrukturen gewichtsneutrale Tragstruktur erzeugt werden kann, die bei vergleichbarer Tragfähigkeit deutlich kostengünstiger ist und ein deutlich verbessertes im Sinne von verstärktes Dämpfungsverhalten aufweist. Aus diesem Grund wird die Verwendung von Stahlbeton im Sinne der Erfindung als besonders bevorzugt angesehen.

In einer weiteren bevorzugten Ausführungsform ist die Tragstruktur des Generatorrotors ringförmig ausgebildet. Die Tragstruktur kann beispielsweise eine oder mehrere Scheiben oder Teilscheiben, und/oder Fachwerkelemente, und/oder Faltwerkelemente, und/oder Faltwerkelemente, und/oder Speichen auf. Besonders bevorzugt ist die Tragstruktur in Form einer einzigen Scheibe ausgebildet, die radial außen mittels allgemein bekannter Verbindungselemente mit dem metallischen Rotorgurt verbunden wird, und radial innen in allgemein bekannter Weise mit dem Nabenflansch verbunden wird. In Abhängigkeit davon, ob der Nabenflansch ebenfalls aus einem metallischen Werkstoff besteht, oder aus demselben Werkstoff, wie die Tragstruktur, sind hier geeignete Verbindungsmittel aus dem Stand der Technik vorzusehen.

Die Tragstruktur ist vorzugsweise aus mehreren Segmenten ausgebildet. Die Segmentierung der Tragstruktur hat zum einen den Vorteil, dass die Tragstruktur aus mehreren zueinander jeweils identischen Fertigteilen, beispielsweise Stahlbeton-Fertigteilen hergestellt werden kann. Bei Verringerung der Teilevielfalt lässt sich hierdurch eine kosten- und zeiteffiziente Herstellung gewährleisten. Die Vielteiligkeit der Tragstruktur trägt zudem zur Energiedissipation und somit zum Dämpfungsverhalten über die bloße Materialauswahl hinaus bei.

Erfindungsgemäß ist zwischen dem Rotorgurt und der Tragstruktur eine Trennfuge ausgebildet, wobei die Tragstruktur entlang der Trennfuge mit dem Rotorgurt kraft- oder formschlüssig, aber nicht stoffschlüssig verbunden ist. Weiter erfindungsgemäß ist zwischen der Tragstruktur und dem Nabenflansch eine Trennfuge ausgebildet, wobei die Tragstruktur entlang der Trennfuge mit dem Nabenflansch kraft- oder formschlüssig, aber nicht stoffschlüssig verbunden ist.

Die Trennfuge ist vorzugsweise teilweise oder vollständig mit einem Füllmaterial gefüllt, welches einen dritten Dämpfungsgrad aufweist, der größer ist als der erste Dämpfungsgrad, und der besonders bevorzugt gleich dem oder größer als der zweite Dämpfungsgrad ist. Die Trennfuge kann beispielsweise mittels Zement, einem aushärtenden Polymer oder dergleichen verfüllt werden.

In bevorzugten Ausführungsformen der Erfindung sind der Rotorgurt und/oder der Nabenflansch aus Stahl oder einer Stahllegierung ausgebildet.

Die Erfindung löst die ihr zugrunde liegende Aufgabe ferner bei einem Generator der eingangs bezeichneten Art, indem sie einen Generator nach Anspruch 11 vorschlägt. Dieser weist einen Generatorstator und einen relativ zu dem Generatorstator umlaufenden Generatorrotor auf, wobei der Generatorrotor nach einer der vorstehend beschriebenen bevorzugten Ausführungsformen ausgebildet ist. Dieser erfindungsgemäße Generator macht sich die gleichen Vorteile zu Nutze und weist dieselben bevorzugten Ausführungsformen wie der vorstehend beschriebene Generatorrotor auf, weswegen diesbezüglich auf die obigen Ausführungen verwiesen wird.

Die Erfindung löst die ihr zugrunde liegende Aufgabe ferner bei einer Windenergieanlage der eingangs bezeichneten Art, indem diese(s) mit den Merkmalen von Anspruch 12 ausgebildet ist. Diese Windenergieanlage weist einen Generator auf, wobei der Generator einen Generatorstator und einen relativ zu dem Generatorstator umlaufenden Generatorrotor aufweist. Die Erfindung schlägt vor, dass der Generatorrotor nach einer der vorstehend beschriebenen bevorzugten Ausführungsformen ausgebildet ist. Somit macht sich auch die erfindungsgemäße Windenergieanlage dieselben Vorteile und bevorzugten Ausführungsformen wie der erfindungsgemäße Generator und der erfindungsgemäße Generatorrotor gemäß den vorstehend beschriebenen bevorzugten Ausführungsformen zu Nutze.

Die Erfindung löst die ihr zugrundliegende Aufgabe ferner bei einem Wasserkraftwerk der eingangs bezeichneten Art, indem dieses mit den Merkmalen von Anspruch 11 ausgebildet ist. Das Wasserkraftwerk weist einen Strömungskanal mit einem Strömungseinlass und einem Strömungsauslass, und eine in dem Strömungskanal angeordnete Wasserturbine auf, die mit einem Generator zum Erzeugen elektrischer Energie wirkverbunden ist, wobei der Generator einen Generatorrotor aufweist, der nach einer der vorstehend beschriebenen bevorzugten Ausführungsformen ausgebildet ist.

Auch diesbezüglich wird hinsichtlich der erreichten Vorteile auf die obigen Ausführungen verwiesen.

Die Erfindung betrifft ferner eine Verwendung von Beton, Betonverbundwerkstoff, insbesondere Stahlbeton oder Faserbeton, Massivholz, Sperrholz, Brettschichtholz, glasverstärktem Kunststoff, oder kohlefaserverstärktem Kunststoff als Material für einen Nabenflansch und/oder eine Tragstruktur eines Generatorrotors einer Windenergieanlage oder eines Wasserkraftwerks. Vorzugsweise ist hierbei der Generatorrotor nach einer der vorstehend beschriebenen bevorzugten Ausführungsformen ausgebildet.

Die Erfindung wird nachfolgend unter Bezugnahme auf die beigefügten Figuren anhand mehrerer bevorzugter Ausführungsbeispiele näher beschrieben. Identische oder funktionsgleiche Merkmale sind hierbei mit identischen Bezugszeichen versehen.

Hierbei zeigen:
- Figur 1a: eine Windenergieanlage schematisch in einer perspektivischen Ansicht,
- Figur 1b eine: Wasserkraftanlage in einer schematischen perspektivischen Ansicht,
- Figur 2: eine Gondel der Windenergieanlage gemäß Figur 1a schematisch in einer perspektivischen Schnittansicht,
- Figur 3a: zeigt eine schematische perspektivische Teilansicht eines Generatorrotors für die Windenergieanlage gemäß den Figuren 1 und 2,
- Figur 3b: eine weitere schematische perspektivische Teilansicht des Teils gemäß Figur 3a,
- Figur 4a: eine schematische Detailansicht einer ersten Befestigungsvariante für den Generatorrotor gemäß Figuren 3a,b, und
- Figur 4b: eine zweite Befestigungsvariante für den Generatorrotor gemäß den Figuren 3a,b.

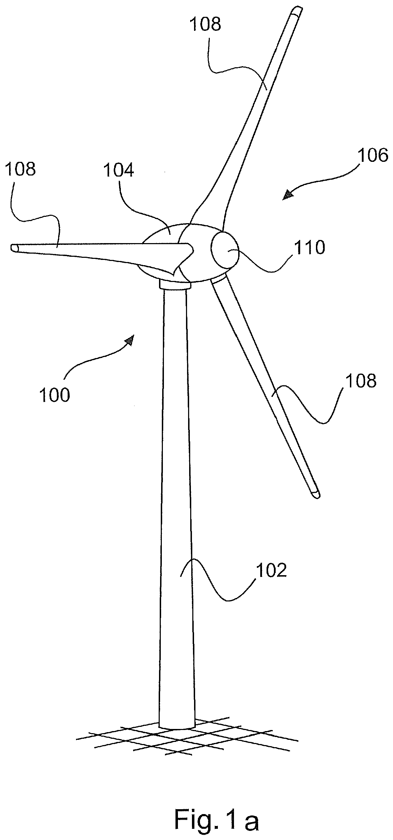

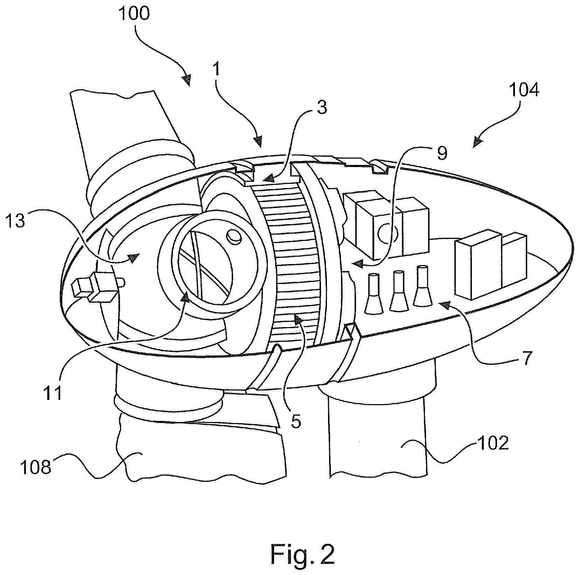

Figur 1a zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird in Betrieb durch den Wind in eine Drehbewegung versetzt und treibt dadurch einen Generator 1 (Figur 2) in der Gondel 104 an.

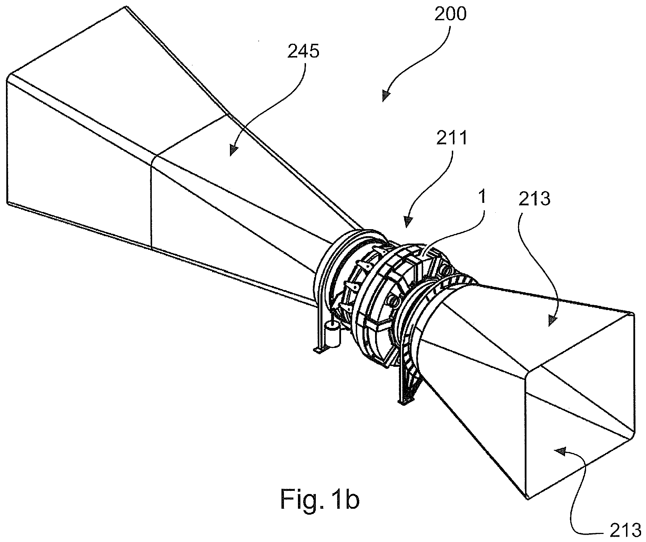

Figur 1b zeigt ein Wasserkraftwerk 200. Das Wasserkraftwerk 200 weist eine Wasserturbine 211 auf, die von Wasser angetrieben wird, das einen Strömungskanal 212 durchströmt. Die Wasserturbine 211 ist zwischen einem Strömungseinlass 213 und einem Strömungsauslass 215 angeordnet und weist einen Generator 5, insbesondere einen vielpoligen, langsam drehenden Synchron-Ringgenerator auf. Der Generator 5ist gemäß den nachstehend beschriebenen Figuren 2 bis 4b ausgebildet, mit der konstruktiven Ausnahme, dass sein (nicht dargestellter) Nabenflansch nicht notwendigerweise mit einer Antriebswelle verbunden sein muss, sondern alternativ auch direkt mit einer Anzahl von Turbinenschaufeln, die in dem Strömungskanal umlaufen. Hierbei spricht man von sogenannten Straight-Flowturbinen. Insbesondere betrifft die Erfindung auch eine Straightflow-Axialturbine.

Die Gondel 104 der Windenergieanlage 100 ist in Figur 2 näher gezeigt. Die Gondel 104 ist drehbar an dem Turm 102 montiert und mittels eines Azimutantriebs 7 in allgemein bekannter Weise angetrieben verbunden. In ferner allgemein bekannter Weise ist in der Gondel 104 ein Maschinenträger 9 angeordnet, der einen vorzugsweise als Synchrongenerator ausgebildeten Generator 1 hält. Der Generator 1 ist gemäß der vorliegenden Erfindung ausgebildet und ist insbesondere ein langsam drehender, vielpoliger Synchron-Ringgenerator. Der Generator 1 weist einen Generatorstator 3 und einen innen laufenden Generatorrotor 5 auf, auch bezeichnet als Läufer. Der Generatorrotor 5 ist mit einer Rotornabe 13 verbunden, die die durch den Wind verursachte Rotationsbewegung der Rotorblätter 108 an den Synchrongenerator 1 überträgt.

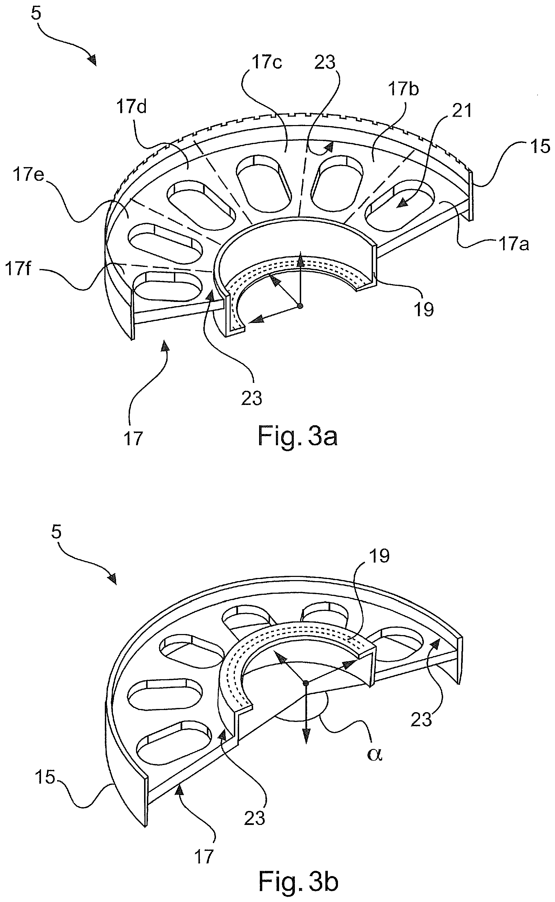

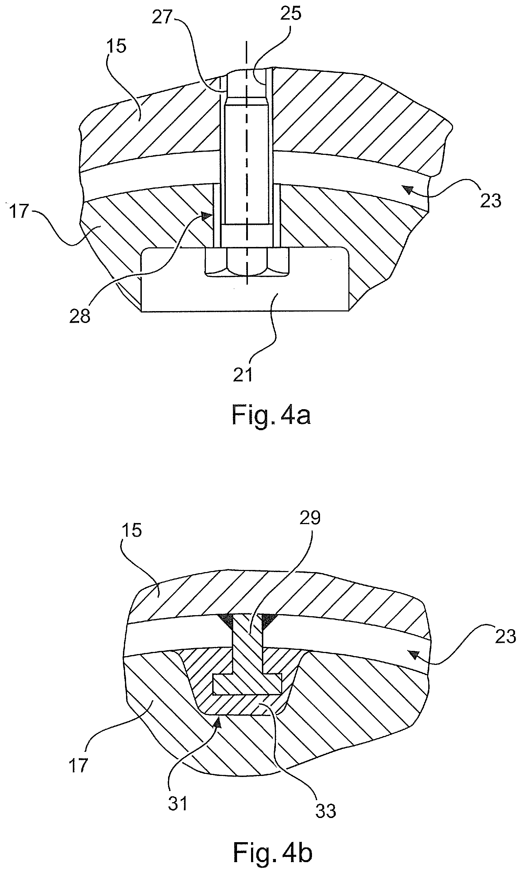

Einzelheiten zum Generator 1 sind in den Figuren 3a,b, 4a,b gezeigt. In den Fgiuren 3a,b ist der Generatorrotor 5 im Aufschnitt dargestellt. Der Generatorrotor 5 weist eine Tragstruktur 17 auf, die aus mehreren Segmenten 17a-f gebildet ist. Die Segmente 17a-f sind vorzugsweise Fertigbauteile, besonders bevorzugt aus Stahlbeton. Die Tragstruktur 17 ist mit einem Rotorgurt 15 verbunden. Der Rotorgurt 15 ist zur Aufnahme der Polschuhe (nicht gezeigt) des Generators 1 angepasst. Auf der radial gegenüberliegenden Innenseite ist die Tragstruktur 17 mit einem Nabenflansch 19 verbunden. Der Nabenflansch 19 ist zur Montage an einer Haupt- oder Getriebewelle der Windenergieanlage 100 angepasst.

Der Rotorgurt 15 und der Nabenflansch 19 sind vorzugsweise aus Stahl oder einer Stahllegierung ausgebildet.

Die Tragstruktur 17 weist mehrere Aussparungen 21 auf, die als Durchströmöffnungen für Luft dienen, und zusätzlich dem Ziel der Gewichtsersparnis und besseren Handhabbarkeit der Tragstruktur 17 dienen.

Die Tragstruktur 17 ist im Wesentlichen scheibenförmig ausgebildet, weist optional allerdings eine leicht kegelstrumpfförmige Kontur auf, die mit einem Kegelwinkel α beschrieben werden kann, siehe Figur 3b.

In den Figuren 4a und b sind verschiedene Befestigungsmöglichkeiten zur Anbindung der Tragstruktur 17 an den Rotorgurt 15 gezeigt. Dieselben Befestigungsvarianten sind vorzugsweise auch zum Anbinden den Tragstruktur 17 an den Nabenflansch 19 vorzusehen. Auf eine separate Darstellung wird zugunsten der Übersichtlichkeit hier verzichtet.

Da gemäß der Erfindung von einer vollständig monolithischen Bauweise des Generatorrotors abgerückt wird, ist zwischen dem Rotorgurt 15 und der Tragstruktur 17 (und vorzugsweise ebenso zwischen der Tragstruktur 17 und dem Nabenflansch 19, Figur 3a,b) eine Trennfuge 23 ausgebildet. Die Trennfuge 23 wird entlang ihres Umfangs mittels einer Anzahl von Befestigungsmitteln überbrückt.

Gemäß der Variante in Figur 4a werden als Befestigungsmittel Schrauben 27 vorgeschlagen, die sich durch eine korrespondierende Ausnehmung 28 in der Tragstruktur 17 hindurch erstrecken, und zum Ausbilden einer kraftschlüssigen Verbindung in eine korrespondierende Gewindebohrung 25 des Rotorgurts 15 eingeschraubt werden. Die Trennfuge 23 wird vorzugsweise so dimensioniert, dass die Tragstruktur 17 und der Rotorgurt 15 in montiertem Zustand aneinander anliegen, allerdings nicht miteinander verpresst sind.

Gemäß einer zweiten Befestigungsvariante, die in Figur 4b gezeigt ist, wird die Tragstruktur 17 entlang der Trennfuge 23 mittels einer Anzahl von Kopfbolzenanbindungen 29 an dem Rotorgurt 15 befestigt. Die Kopfbolzenanbindungen 29 sind auf Seiten des Rotorgurts 15 mit diesem verschweißt und greifen in Aussparungen 31 der Tragstruktur 17 ein. Diese Aussparungen 31 werden nach erfolgter Positionierung der Tragstruktur 17 relativ zum Rotorgurt 15 mit einem aushärtenden Material 33 vergossen. Bei dem aushärtenden Material kann es sich beispielsweise um Zement, oder ein aushärtendes Polymer, etwa Kunstharz, handeln. Auch gemäß der Variante in Figur 4b ist die Trennfuge 23 vorzugsweise so dimensioniert, dass die Tragstruktur 17 und der Rotorgurt 15 in montiertem Zustand aneinander anliegen, aber nicht miteinander verpresst sind. Alternativ zu der bevorzugten Ausgestaltung kann für beide Varianten (Figur 4a und 4b) die Trennfuge 23 auch teilweise oder vollständig mit einem aushärtenden Material verfüllt werden. Besonders bevorzugt ist das die Trennfuge 23 teilweise oder vollständig füllende Material nicht vollelastisch, sondern weist ebenfalls einen dritten Dämpfungsgrad auf, der vorzugsweise größer ist als der erste Dämpfungsgrad des Rotorgurts 15, und besonders bevorzugt gleich oder größer als der zweite Dämpfungsgrad der Tragstruktur.

## Patentansprüche

1. Generatorrotor (5) für einen Generator (1), insbesondere langsam drehenden Generator, einer Windenergieanlage (100) oder eines Wasserkraftwerkes (200), mit
einem Rotorgurt (15), zum Halten mehrerer Polschuhe,
einem Nabenflansch (19) zur Befestigung des Generatorrotors (5) an einer Welle, insbesondere Hauptwelle oder Getriebewelle, der Windenergieanlage (100), oder zur Befestigung an einer Anzahl von Turbinenschaufeln des Wasserkraftwerks (200), und
einer Tragstruktur (17), welche mit dem Rotorgurt (15) einerseits und mit dem Nabenflansch (19) andererseits jeweils drehfest verbunden ist,
wobei der Rotorgurt (15) aus einem metallischen Werkstoff mit einem ersten Dämpfungsgrad (D₁) besteht, und zumindest eines von: Tragstruktur (17) oder Nabenflansch (19) teilweise oder vollständig aus einem Material mit einem zweiten Dämpfungsgrad (D₂) besteht, wobei der zweite Dämpfungsgrad (D₂) höher ist als der erste Dämpfungsgrad (D₁), wobei zwischen dem Rotorgurt (15) und der Tragstruktur (17) eine Trennfuge (23) ausgebildet ist, und wobei die Tragstruktur (17) entlang der Trennfuge (23) mit dem Rotorgurt (15) kraft- oder formschlüssig, aber nicht stoffschlüssig verbunden ist, und zwischen der Tragstruktur (17) und dem Nabenflansch (19) eine Trennfuge (23) ausgebildet ist, und wobei die Tragstruktur (17) entlang der Trennfuge (23) mit dem Nabenflansch (19) kraft- oder formschlüssig, aber nicht stoffschlüssig verbunden ist.

2. Generatorrotor (5) nach Anspruch 1,
wobei der erste Dämpfungsgrad (D₁) in einem Bereich von D₁=0,002 oder geringer liegt, vorzugsweise in einem Bereich von D₁=0,0015 oder geringer.

3. Generatorrotor (5) nach Anspruch 1 oder 2,
wobei der zweite Dämpfungsgrad das n-fache des ersten Dämpfungsgrades beträgt, wobei n gleich 2 oder höher ist.

4. Generatorrotor (5) nach einem der vorstehenden Ansprüche,
wobei zumindest eines von: Tragstruktur (17) oder Nabenflansch (19) teilweise oder vollständig aus einem der folgenden Materialien besteht:
- Beton;
- Betonverbundwerkstoff, insbesondere Stahlbeton oder Faserbeton;
- Massivholz;
- Sperrholz;
- Brettschichtholz;
- glasfaserverstärkter Kunststoff; oder
- kohlefaserverstärkter Kunststoff.

5. Generatorrotor (5) nach einem der vorstehenden Ansprüche,
wobei die Tragstruktur (17) ringförmig ausgebildet ist.

6. Generatorrotor (5) nach einem der vorstehenden Ansprüche,
wobei die Tragstruktur (17) aus mehreren Segmenten (17a-f) ausgebildet ist.

7. Generatorrotor (5) nach einem der vorstehenden Ansprüche,
wobei die Trennfuge (23) teilweise oder vollständig mit einem Füllmaterial (33) gefüllt ist, welches einen dritten Dämpfungsgrad D₃ aufweist, der größer als der erste Dämpfungsgrad D₁ ist, besonders bevorzugt gleich dem oder größer als der zweite Dämpfungsgrad D2 ist.

8. Generatorrotor (5) nach einem der vorstehenden Ansprüche,
wobei der Rotorgurt (15) und/oder der Nabenflansch (19) aus Stahl oder einer Stahllegierung ausgebildet sind.

9. Generator (1) einer Windenergieanlage (100) oder eines Wasserkraftwerks, mit einem Generatorstator (3), und einem relativ zu dem Generatorstator (3) umlaufenden Generatorrotor (5),
wobei der Generatorrotor (5) nach einem der vorstehenden Ansprüche ausgebildet ist.

10. Windenergieanlage (100), mit
einem Generator (1), wobei der Generator (1) einen Generatorstator (3) und einen relativ zu dem Generatorstator (3) umlaufenden Generatorrotor (5) aufweist,
wobei der Generatorrotor (5) nach einem der Ansprüche 1 bis 8 ausgebildet ist.

11. Wasserkraftwerk (200), mit
einem Strömungskanal (212) mit einem Strömungseinlass (213) und einem Strömungsauslass (215),
einer in dem Strömungskanal angeordneten Wasserturbine (211), die mit einem Generator (1) zum Erzeugen elektrischer Energie wirkverbunden ist, wobei
der Generator einen Generatorrotor (5) aufweist, der nach einem der Ansprüche bis 8 ausgebildet ist.

12. Verwendung von
- Beton;
- Betonverbundwerkstoff, insbesondere Stahlbeton oder Faserbeton;
- Massivholz;
- Sperrholz;
- Brettschichtholz;
- glasfaserverstärktem Kunststoff; oder
- kohlefaserverstärktem Kunststoff
als Material für einen Nabenflansch (19) und/oder eine Tragstruktur (17) eines Generatorrotors (5) einer Windenergieanlage (100) oder eines Wasserkraftwerks (200),
wobei der Generatorrotor (5) nach einem der Ansprüche 1 bis 8 ausgebildet ist.

## Claims

1. A generator rotor (5) for a generator (1), in particular a slowly rotating generator, of a wind turbine (100) or a hydroelectric power plant (200), comprising
a rotor belt (15) for holding a plurality of pole shoes,
a hub flange (19) for fixing the generator rotor (5) to a shaft, in particular a main shaft or a transmission shaft, of the wind turbine (100), or for fixing to a number of turbine blades of the hydroelectric power plant (200), and
a carrier structure (17) which is respectively non-rotatably connected to the rotor belt (15) on the one hand and to the hub flange (19) on the other hand,
wherein the rotor belt (15) comprises a metallic material having a first degree of damping (D₁) and at least one of: the carrier structure (17) or the hub flange (19) partially or completely comprises a material having a second degree of damping (D₂), wherein the second degree of damping (D₂) is higher than the first degree of damping (D₁),
wherein a separating gap (23) is provided between the rotor belt (15) and the carrier structure (17), and wherein the carrier structure (17) is connected to the rotor belt (15) along the separating gap (23) in force-locking or positively locking relationship but not in material-bonded relationship, and a separating gap (23) is provided between the carrier structure (17) and the hub flange (19) and wherein the carrier structure (17) is connected to the hub flange (19) along the separating gap (23) in force-locking or positively locking relationship, but not in material-bonded relationship.

2. A generator rotor (5) according to claim 1
wherein the first degree of damping (D₁) is in a region of D₁ = 0.002 or less, preferably in a region of D₁ = 0.0015 or less.

3. A generator rotor (5) according to claim 1 or claim 2
wherein the second degree of damping is n times the first degree of damping, wherein n is equal to 2 or higher.

4. A generator rotor (5) according to one of the preceding claims wherein at least one of: the carrier structure (17) or the hub flange (19) partially or completely comprises one of the following materials:
- concrete;
- concrete composite, in particular steel-reinforced concrete or fibre-reinforced concrete;
- solid wood;
- plywood;
- laminated timber;
- glass fibre-reinforced plastic; or
- carbon fibre-reinforced plastic.

5. A generator rotor (5) according to one of the preceding claims
wherein the carrier structure (17) is of an annular configuration.

6. A generator rotor (5) according to one of the preceding claims wherein the carrier structure (17) is made up of a plurality of segments (17a-f).

7. A generator rotor (5) according to one of the preceding claims
wherein the separating gap (23) is partially or completely filled with a filling material (33) having a third degree of damping (D₃) which is greater than the first degree of damping (D₁), particularly preferably equal to or greater than the second degree of damping (D₂).

8. A generator rotor (5) according to one of the preceding claims
wherein the rotor belt (15) and/or the hub flange (19) is made of steel or a steel alloy.

9. A generator (1) of a wind turbine (100) or a hydroelectric power plant comprising
a generator stator (3) and a generator rotor (5) which rotates relative to the generator stator (3),
wherein the generator rotor (5) is as set forth in one of the preceding claims.

10. A wind turbine (100) comprising
a generator (1), wherein the generator (1) has a generator stator (3) and a generator rotor (5) which rotates relative to the generator stator (3),
wherein the generator rotor (5) is as set forth in one of claims 1 to 8.

11. A hydroelectric power plant (200) comprising
a flow passage (212) having a flow inlet (213) and flow outlet (215), and
a water turbine (211) which is arranged in the flow passage and which is operatively connected to a generator (1) for generating electrical energy, wherein the generator has a generator rotor (5) which is as set forth in one of claims 1 to 8.

12. Use of
- concrete;
- concrete composite, in particular steel-reinforced concrete or fibre-reinforced concrete;
- solid wood;
- plywood;
- laminated timber;
- glass fibre-reinforced plastic; or
- carbon fibre-reinforced plastic
as a material for a hub flange (19) and/or a carrier structure (17) of a generator rotor (5) of a wind turbine (100) or a hydroelectric power plant (200), wherein the generator rotor (5) is as set forth in one of claims 1 to 8.

## Revendications

1. Rotor de générateur (5) pour un générateur (1), en particulier un générateur à rotation lente, d'une installation d'énergie éolienne (100) ou d'une centrale hydroélectrique (200), avec
une bague de rotor (15), pour le maintien de plusieurs pièces polaires,
un flasque de moyeu (19) pour la fixation du rotor de générateur (5) à un arbre, en particulier à un arbre principal ou un arbre d'entraînement, de l'installation d'énergie éolienne (100), ou pour la fixation à une pluralité d'aubes de turbine de la centrale hydroélectrique (200), et
une structure porteuse (17), qui est reliée solidaire en rotation respectivement d'une part à la bague de rotor (15) et d'autre part au flasque de moyeu (19),
dans lequel la bague de rotor (15) est composée d'une matière métallique présentant un premier degré d'amortissement (D₁), et au moins un : de la structure porteuse (17) ou du flasque de moyeu (19) est composé en partie ou en intégralité d'un matériau présentant un deuxième degré d'amortissement (D₂), dans lequel le deuxième degré d'amortissement (D₂) est plus grand que le premier degré d'amortissement (D₁),
dans lequel entre la bague de rotor (15) et la structure porteuse (17) est formée une fente de séparation (23), et dans lequel la structure porteuse (17) est reliée le long de la fente de séparation (23) à la bague de rotor (15) à force ou par complémentarité de forme, mais pas par continuité de matière, et entre la structure porteuse (17) et le flasque de moyeu (19) est formée une fente de séparation (23), et dans lequel la structure porteuse (17) est reliée le long de la fente de séparation (23) au flasque de moyeu (19) à force ou par complémentarité de forme, mais pas par continuité de matière.

2. Rotor de générateur (5) selon la revendication 1,
dans lequel le premier degré d'amortissement (D₁) est situé dans une plage de D₁ = 0,002 ou moins, de préférence dans une plage de D₁ = 0,0015 ou moins.

3. Rotor de générateur (5) selon la revendication 1 ou 2,
dans lequel le deuxième degré d'amortissement est égal à n fois le premier degré d'amortissement, dans lequel n est égal ou supérieur à 2.

4. Rotor de générateur (5) selon l'une quelconque des revendications précédentes, dans lequel au moins un : de la structure porteuse (17) ou du flasque de moyeu (19) est composé partiellement ou intégralement d'un des matériaux suivants :
- béton ;
- matériau composite en béton, en particulier béton armé ou béton à adjuvant fibreux ;
- bois massif ;
- contreplaqué ;
- bois lamellé-collé ;
- matière synthétique armée aux fibres de verre ; ou
- matière synthétique armée aux fibres de carbone.

5. Rotor de générateur (5) selon l'une quelconque des revendications précédentes, dans lequel la structure porteuse (17) est conçue sous forme d'anneau.

6. Rotor de générateur (5) selon l'une quelconque des revendications précédentes, dans lequel la structure porteuse (17) est formée de plusieurs segments (17a-f).

7. Rotor de générateur (5) selon l'une quelconque des revendications précédentes,
dans lequel la fente de séparation (23) est remplie partiellement ou intégralement avec un matériau de remplissage (33) qui présente un troisième degré d'amortissement D₃, qui est plus grand que le premier degré d'amortissement D₁, de manière particulièrement préférée, égal à celui-ci ou supérieur au deuxième degré d'amortissement D₂.

8. Rotor de générateur (5) selon l'une quelconque des revendications précédentes,
dans lequel la bague de rotor (15) et/ou le flasque de moyeu (19) sont formés en acier ou en un alliage d'acier.

9. Générateur (1) d'une installation d'énergie éolienne (100) ou d'une centrale hydroélectrique, avec un stator de générateur (3) et un rotor de générateur (5) rotatif par rapport au stator de générateur (3),
dans lequel le rotor de générateur (5) est conçu selon l'une quelconque des revendications précédentes.

10. Installation d'énergie éolienne (100), avec
un générateur (1), dans lequel le générateur (1) comprend un stator de générateur (3) et un rotor de générateur (5) rotatif par rapport au stator de générateur (3), dans lequel le rotor de générateur (5) est conçu selon l'une quelconque des revendications 1 à 8.

11. Centrale hydroélectrique (200), avec
un canal d'écoulement (212) ayant une entrée d'écoulement (213) et une sortie d'écoulement (215),
une turbine hydraulique (211), disposée dans le canal d'écoulement, qui est en liaison active avec un générateur (1) pour la production d'énergie électrique, dans lequel le générateur comprend un rotor de générateur (5) qui est conçu selon l'une quelconque des revendications 1 à 8.

12. Utilisation de
- béton ;
- matériau composite en béton, en particulier béton armé ou béton à adjuvant fibreux ;
- bois massif ;
- contreplaqué ;
- bois lamellé-collé ;
- matière synthétique armée aux fibres de verre ; ou
- matière synthétique armée aux fibres de carbone
en tant que matériau pour un flasque de moyeu (19) et/ou une structure porteuse (17) d'un rotor de générateur (5) d'une installation d'énergie éolienne (100) ou d'une centrale hydroélectrique (200), dans lequel le rotor de générateur (5) est conçu selon l'une quelconque des revendications 1 à 8.
